# EUROPEAN PATENT SPECIFICATION

(11) **EP 0 908 880 B1**
(45) Date of publication and mention of the grant of the patent: **22.02.2006**
(21) Application number: 98118223.1
(22) Date of filing: 25.09.1998
(51) Int. Cl.: G11B 15/60, G11B 15/61

(54) **Tape-guiding element**
Bandführungsvorrichtung
Dispositif de guidage de bande

(30) Priority: 08.10.1997 DE 19744323
(43) Date of publication of application: 14.04.1999
(73) Proprietor: DEUTSCHE THOMSON-BRANDT GMBH, 78048 Villingen-Schwenningen (DE)
(72) Inventor: Weisser, Fritz, 78112 St. Georgen (DE)
(74) Representative: Arnold, Klaus-Peter

(56) References cited:
- EP-A- 0 671 722
- FR-A- 2 032 308
- GB-A- 2 308 723
- JP-A- 9 180 314
- US-A- 3 471 653
- US-A- 4 875 123

## Description

The invention is based on a tape-guiding system comprising a baseplate and a tape-guiding element for guiding a means in tape form, in particular a magnetic tape for recording and/or reproducing signals, according to the preamble of claim 1.

In video recorders, such tape-guiding elements are preferably designed as deflecting rollers and, in addition to this function, perform the task there of guiding the tape for the interaction between tape transport and signal scanning. The small track widths of, for example, 25-50 µm of recorded signals, or of signals to be recorded, together with the required compatibility of video recorders with one another, require in such cases a corresponding setting or height adjustment of the tape-guiding elements, in particular for leading the tape into and away from the scanning region.

Therefore, in particular in recorders based on the helical scanning method, such tape-guiding elements are arranged adjustably in their height in relation to the drive chassis or the like by means having a thread. Such an arrangement is known, for example, from EP 0 127 447 B1.

For track widths below 10 µm of signals to be recorded, such arrangements reach their limits, however, since in the case of such small track widths setting means with such small thread pitches that they can only be produced with difficulty are required for corresponding height adjustments of the tape-guiding elements.

A tape guiding system according to the preamble of the claim 1 is disclosed in US-A-4875123 and FR-A-2032308.

It is therefore an object of the invention to improve the height adjustment for such a tape-guiding system. This object is achieved by the features given in Claim 1.

The invention is based on the idea of arranging such a tape-guiding element by means of a lever-like device on the drive chassis or an appropriately different means of support and of using the leverage from the corresponding arrangement of the setting means and tape-guiding element for adjusting the height of the latter in a simple way.

The invention also has the advantage that it can be accomplished by simple constructional means. For example, with appropriate leverage, it is possible to dispense with the conventional setting capability by means of a fine thread, so that the constructional expenditure for such a tape-guiding element can be reduced considerably.

On the other hand, by a combination of the setting according to the invention by means of leverage and a conventional setting, such adjustments of tape-guiding elements can be advantageously accomplished in a simple way with a fine thread of far superior precision.

It is, furthermore, an object of the invention to improve the height adjustment in relation to the drive chassis or the like, in particular for tape-guiding elements, in a recorder for recording and/or reproducing signals with a recording medium in tape form..

This object is achieved by the features given in Claim 4.

The invention is explained in more detail on the basis of an exemplary embodiment, in which
Figure 1 shows an arrangement according to the invention of a tape-guiding element and
Figure 2. shows a known arrangement of a tape-guiding element.

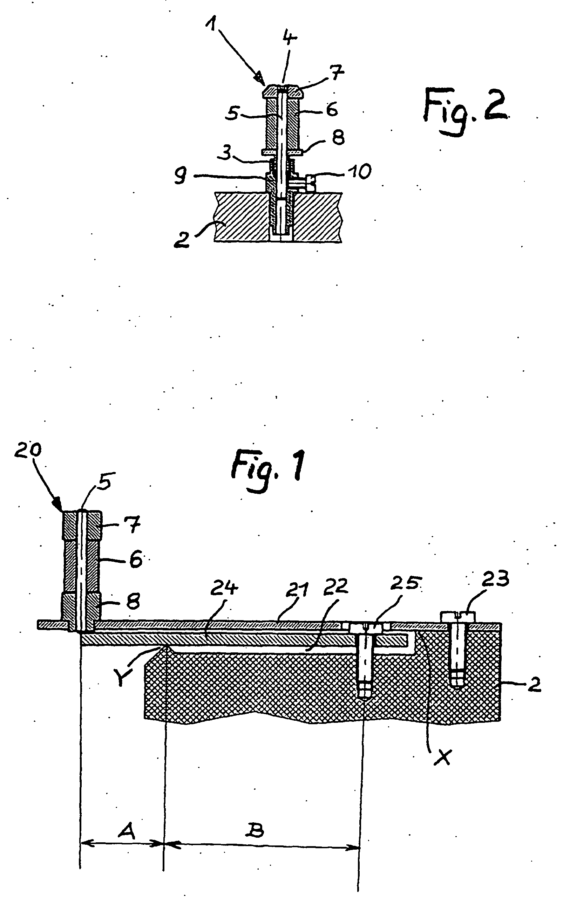

It should first of all be pointed out that, in Figures 1 and 2, identical or mutually corresponding parts are provided with the same reference numerals.

Represented in Figure 2 is a known tape-guiding element 1 with setting means 3, 4 for the adjustment of the latter in relation to a baseplate 2. The baseplate 2 may form, for example, part of a drive chassis (not shown) or else part of a threading device (not shown) in a recorder based on the helical scanning method.

The tape-guiding element 1 is mounted on a spindle 5 perpendicular to the baseplate 2 and has a roller 6 which is rotatable about this spindle 5 and has an upper flange 7 and a lower flange 8. By means of a screw connection 3 of the lower flange 8 to a receiving bush 9, which is fixedly connected to the baseplate 2, the tape-guiding element 1 is adjustable perpendicularly with respect to the baseplate 2. For this purpose, the screw connection 3 of the lower flange 8 with the receiving bush 9 is designed as a fine thread with a pitch of, for example, 0.2 mm. The upper and lower flanges 7, 8 have been pressed onto the spindle 5 with such a distance that the roller 6 is rotatable. The upper flange 7 has a slit 4 for the actuation of the tape-guiding element 1 for the adjustment of the latter.

Before the adjustment of the tape-guiding element 1, first of all a locking screw 10, provided in the receiving bush 9, must be loosened. The adjustment is effected by a corresponding height setting of the tape-guiding element 1, by the latter being actuated by means of the slit 4 provided in the upper flange 7. For fixing the adjusted tape-guiding element 1, the locking screw 10 is subsequently tightened again. The fixing by means of the locking screw 10 is by way of example and may therefore also be achieved by other known means.

Figure 1 shows an exemplary arrangement of a tape-guiding element 20 with means 22, 25 for the height adjustment of the latter in relation to a baseplate 2 according to the present invention.

The tape-guiding element 20, which does not need the setting means 3, 4 described in Figure 1, is rotatably mounted here at one end of a strip-like receiving plate 21. The receiving plate 21, which extends virtually parallel over a recess 22 formed on the baseplate 2, is fixedly connected at its other end, which forms the fastening side, to the baseplate 2, preferably by a screw connection produced by an assembly screw 23.

The lower flange 8 of the tape-guiding element 20, into which flange the spindle 5 of the tape-guiding element has been pressed, is fixedly connected to the receiving plate 21, preferably by a rivet connection. The upper flange 7 is arranged fixedly on the spindle 5 at a distance, in such a way that the roller 6 of the tape-guiding element 20 is rotatable.

A strip-like adjusting plate 24, arranged in the recess 22, is preferably provided for the height adjustment of the tape-guiding element 20. The adjusting plate 24 is preferably designed as a double-ended lever, which is in engagement with the receiving plate 21 in the vicinity of the tape-guiding element 20 by one of its lever ends and is connected to the baseplate 2 by means of an adjusting screw 25 which can be actuated for the height adjustment and acts on its other lever end, an edge Y formed on the recess 21 serving as a fulcrum for the lever. The lever lengths which are respectively effective for the adjustment are denoted by A and B.

The fastening side of the receiving plate 21 is designed such that it can be angled away by an angle which is small, and therefore is not shown, in such a way that, without the action of the adjusting plate 24, the receiving plate 21 would be bent away in the direction of the recess 22 from an edge X forming the transition with respect to the recess 22. By this measure, the receiving plate 21 is kept in engagement with the adjusting plate 24 under prestressing.

The adjusting plate 24 can be tilted over the edge Y by turning the adjusting screw 25. The ratio of the lever lengths A to B in this case determines the setting sensitivity for the adjustment of the tape-guiding element 20. An appropriate distance of the tape-guiding element 20 from the edge X has the effect that an actuation of the adjusting screw 25 results only in a small, virtually negligible change in angle of the tape-guiding element 20 perpendicularly with respect to the baseplate 2 and consequently no influence on the running of the tape. The adjusting screw 25 may act both as a tension screw and, conversely, as a compression screw.

The tape-guiding element 20 is thus mounted at the end of a strip-like receiving plate 21 which forms a lever which is restrained at one end and which - for the purpose of adjusting the tape-guiding element 20 - can be actuated by means of.a further two-armed lever, formed by the adjusting plate 24, the ratio of the lever lengths A to B determining the setting sensitivity.

With such a device, not only tape guides can be set and/or adjusted but also other elements, such as for example heads for recording and/or reproducing signals, prisms for threading carriages in a recorder based on the helical scanning method, etc.

Such a device can be advantageously used, furthermore, in future video recorders with digital processing of recorded signals, or signals to be recorded, since efforts in this area are aimed at ever narrower recording tracks and consequently more accurately operating setting means for tape-guiding elements 1 are also required and these would otherwise have to be accomplished by thread pitches of less than 0.1 mm, which can only be produced with difficulty.

In addition, the setting sensitivity, and consequently the setting accuracy, can be further increased by additionally providing the tape-guiding element 20 of the arrangement according to the invention with the conventional setting means 3, 4 of the known arrangement, described in Figure 1. In the case of such a combination of setting possibilities, the arrangement can be made smaller, saving space, the conventional setting means 3, 4 being used, for example, for a so-called coarse adjustment while the setting means 24, 25 of the present invention serve for the fine adjustment.

The present exemplary embodiment has been used to explain the principle of the invention. However, other types of construction within the scope of the claims are also conceivable on the basis of this invention.

## Claims

1. Tape-guiding system comprising a baseplate (2) and a tape-guiding element (20) for guiding a means in tape form, in particular a magnetic tape for recording and/or reproducing signals,
having further means for its arrangement on the baseplate (2) and means for its adjustment with respect to the guidance of the means in tape form, in particular during the transport of the latter from a supply roll to a take-up roll and vice versa,
the means for the adjustment of said tape-guiding element (20) being formed by a lever-like means (21), which is arranged on the baseplate (2) and on which the tape-guiding element (20) is arranged in such a way that an actuation of the lever-like means (21) results at the same time in a setting movement of the tape-guiding element (20) perpendicularly with respect to the baseplate (2), **characterized in that**
the lever-like means (21) is actuated via an adjusting plate (24) which is designed as a double-ended lever which is in engagement with the lever-like means (21), supporting the tape-guiding element (20), in the vicinity of the tape-guiding element (20) by one of its lever ends and is connected to the baseplate (2) by means of an adjusting screw (25) which can be actuated for the adjustment and acts on its other lever end, an edge (Y) which is provided in the baseplate (2) serving as a fulcrum for the double-ended lever.

2. Tape-guiding system according to Claim 1, **characterized in that** the ratio of the lever lengths (A) to (B) of the double-ended lever formed by the adjusting plate (24) determines the setting sensitivity for the adjustment of the tape-guiding element (20).

3. Tape-guiding system according to claim 1 or 2, **characterized in that** the tape-guiding element (20) is arranged in a settable manner on the lever-like means (21) supporting it and arranged on the baseplate (2).

4. Recorder for recording and/or reproducing signals with a recording medium in tape form, having a tape-guiding system according to one of the preceding claims 1-3.

## Patentansprüche

1. Bandführungssystem mit einer Grundplatte (2) und einem Bandführungselement (20) zur Führung eines bandförmigen Mittels, insbesondere eines Magnetbands zur Aufzeichnung und/oder Wiedergabe von Signalen,
ferner mit Mitteln für seine Anordnung auf der Grundplatte (2) und Mitteln für seine Einstellung relativ zu den bandförmigen Mitteln, insbesondere während des Transports des letzteren von einer Vorratsrolle zu einer Bandaufnahmerolle, und umgekehrt,
wobei die Mittel für die Einstellung des Bandführungselements (20) die Form von hebelartigen Mitteln (21) aufweisen, die auf der Grundplatte (2) angeordnet sind und auf denen das Bandführungselement (20) derart angeordnet ist, dass eine Betätigung der hebelartigen Mittel (21) gleichzeitig die Einstellung der Bewegung des Bandführungselements (20) senkrecht zu der Grundplatte (2) bewirken,
**dadurch gekennzeichnet, dass**
die hebelartigen Mittel (21) über eine Einstellplatte (24) betätigt werden, die als zweiseitiger Hebel ausgebildet sind, der in Eingriff steht mit den hebelartigen Mitteln (21), die das Bandführungselement (20) tragen, in der Nachbarschaft des Bandführungselements (22) durch einen seiner Hebelenden und verbunden ist mit der Grundplatte (2) durch eine Einstellschraube (25), die für die Einstellung betätigt werden kann und auf ihr anderes Habelende wirkt, dass eine Kante (Y) in der Grundplatte (2) vorgesehen, die als ein Gelenkpunkt für den doppelseitigen Hebel dient.

2. Bandführungssystem nach Anspruch 1, **dadurch gekennzeichnet, dass** das Verhältnis der Hebellängen (A) zu (B) des durch das Justageblech (24) gebildeten zweiseitigen Hebels die Einstellempfindlichkeit für die Justierung des Bandführungselementes (20) bestimmt.

3. Bendführungssystem nach Anspruch 1 oder 2, **dadurch gekennzeichnet, dass** das Bandführungselement (20) auf dem hebelartigen, ihn tragenden und auf der Grundplatte (2) angeordneten Mittel (21) einstellbar angeordnet ist.

4. Rekorder zur Aufzeichnung und/oder Wiedergabe von Signalen mit einem bandförmigen Aufzeichnungsmedium mit einem Bandführungssystem nach einem der vorangehenden Ansprüche 1 bis 3.

## Revendications

1. Système de guidage de bande comprenant une plaque de base (2) et un dispositif de guidage de bande (20) pour guider un moyen qui se présente sous forme de bande, en particulier une bande magnétique pour enregistrer et/ou reproduire des signaux,
comportant également des moyens pour le disposer sur la plaque de base (2) et des moyens pour le régler par rapport au guidage du moyen qui se présente sous forme de bande, en particulier pendant l'acheminement de ce dernier d'un rouleau d'alimentation vers un rouleau tendeur et vice versa,
les moyens de réglage dudit dispositif de guidage de bande (20) étant constitués d'un moyen de type levier (21), qui se trouve sur la plaque de base et sur laquelle le dispositif de guidage de bande (20) est disposé de sorte qu'une activation du moyen de type levier (21) entraîne simultanément un mouvement de paramétrage du dispositif de guidage de bande (20) perpendiculairement à la plaque de base (2), **caractérisé en ce que**
le dispositif de type levier (21) est activé à l'aide d'une plaque de réglage (24) conçue comme un levier à deux extrémités, engagée avec le moyen de type levier (21), supportant le dispositif de guidage de bande (20), à proximité du dispositif de guidage de bande (20) au niveau de l'une de ses extrémités de levier et assemblée à la plaque de base (2) au moyen d'une vis de réglage (25) qui peut être activée pour le réglage et qui agit sur l'autre extrémité de son levier, un bord en Y présent sur la plaque de base (2) servant de point d'appui pour le levier à deux extrémités.

2. Système de guidage de bande selon la revendication 1, **caractérisé en ce que** le ratio des longueurs de levier (A) et (B) du levier à deux extrémités formé par la plaque de réglage (24) détermine la sensibilité de paramétrage pour le réglage du dispositif de guidage de bande (20).

3. Système de guidage de bande selon la revendication 1 ou 2, **caractérisé en ce que** le dispositif de guidage de bande (20) est disposé de façon à pouvoir être paramétré sur le moyen de type levier (21) qui le supporte et qui se trouve sur la plaque de base (2).

4. Enregistreur pour enregistrer et/ou reproduire des signaux à l'aide d'un support d'enregistrement qui se présente sous forme de bande, comportant un système de guidage par bande selon l'une des revendications précédentes 1 à 3.
